# EUROPÄISCHE PATENTSCHRIFT

(11) **EP 2 706 817 B1**
(45) Veröffentlichungstag und Bekanntmachung des Hinweises auf die Patenterteilung: **30.03.2016**
(21) Anmeldenummer: 13182265.2
(22) Anmeldetag: 29.08.2013
(51) Int. Cl.: H05B 6/12, H05B 6/06

(54) **KOCHFELDVORRICHTUNG**
COOKING HOB
PLAQUE DE CUISSON

(30) Priorität: 07.09.2012 ES 201231392
(43) Veröffentlichungstag der Anmeldung: 12.03.2014
(73) Patentinhaber: BSH Hausgeräte GmbH, 81739 München (DE)
(72) Erfinder: Burdio Pinilla, José Miguel, 50018 Zaragoza (ES); Hernández Blasco, Pablo Jesús, 50410 Cuarte de Huerva (Zaragoza) (ES); Llorente Gil, Sergio, 50009 Zaragoza (ES); Lucía Gil, Oscar, 50006 Zaragoza (ES); Mediano Heredia, Arturo, 50012 Zaragoza (ES); Palacios Tomás, Daniel, 50008 Zaragoza (ES); Sarnago Andia, Hector, 42110 Olvega (Soria) (ES)

(56) Entgegenhaltungen:
- EP-A1- 2 237 641
- EP-A2- 2 170 010
- JP-A- H04 337 279
- US-A1- 2011 253 706

## Beschreibung

Die Erfindung geht aus von einer Kochfeldvorrichtung nach dem Oberbegriff des Anspruchs 1, wie auch aus JP H04 337 279 A bekannt ist.

Es sind Induktionskochfelder mit unterschiedlichen Konzepten der Hochfrequenzerzeugung, insbesondere mittels Halbbrückenschaltung, Vollbrückenschaltung, bzw. Einschaltertopologie, bekannt.

Die Aufgabe der Erfindung besteht insbesondere darin, eine gattungsgemäße Vorrichtung mit einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, mit zumindest einem Resonanzheizkreis, der eine Parallelschaltung aufweist, die zumindest einen Kapazitivzweig und zumindest einen Induktivzweig zwischen einem ersten und einem zweiten Verbindungspunkt der Parallelschaltung aufweist, und mit zumindest einer Heizfrequenzeinheit, die zumindest zwei Schaltelemente aufweist und die dazu vorgesehen ist, den Resonanzheizkreis anzulegen.

Es wird vorgeschlagen, dass ein erster Leistungskontakt eines ersten der Schaltelemente direkt mit einem ersten Verbindungspunkt verbunden ist und ein erster Leistungskontakt eines zweiten der Schaltelemente direkt mit dem zweiten Verbindungspunkt verbunden ist. Unter "vorgesehen" soll insbesondere speziell programmiert, ausgelegt und/oder ausgestattet verstanden werden. Unter einem "Kapazitivzweig" soll insbesondere ein Zweipol verstanden werden, der in einem Betriebszustand zumindest in einem Frequenzbereich zwischen 20 kHz und 100 kHz, insbesondere zumindest zwischen 10 kHz und 150 kHz, vorteilhaft zumindest zwischen 0 kHz und 200 kHz, einen negativen Blindwiderstand aufweist, der vorteilhaft zumindest 50 insbesondre zumindest 80 %, vorteilhaft zumindest 90%, besonders vorteilhaft zumindest 95%, vorzugsweise zumindest 98%, eines Scheinwiderstands des Zweipols entspricht. Insbesondere sind in dem Kapazitivzweig neben Verbindungsleitern lediglich Kapazitäten, insbesondere zumindest ein, vorteilhaft genau ein, Kondensator, angeordnet. Alternativ ist es denkbar, dass der Kapazitivzweig mehrere in Reihe und/oder Parallel geschaltete Kapazitäten aufweist. Unter einem "Induktivzweig" soll insbesondere ein Zweipol verstanden werden, der in einem Betriebszustand zumindest in einem Frequenzbereich zwischen 20 kHz und 100 kHz, insbesondere zumindest zwischen 10 kHz und 150 kHz, vorteilhaft zumindest zwischen 0 kHz und 200 kHz, einen positiven Blindwiderstand aufweist, der vorteilhaft zumindest 10%, insbesondere zumindest 20 %, vorteilhaft zumindest 40 %, besonders vorteilhaft zumindest 60%, eines Scheinwiderstands des Zweipols entspricht. Insbesondere weist der Induktivzweig lediglich Induktivitäten auf. Vorzugsweise sind die Induktivitäten des Induktivzweigs als Induktionsheizleitungen ausgebildet. Unter einer "Induktionsheizleitung" soll insbesondere eine elektrische Leitung verstanden werden, die dazu vorgesehen ist, einen elektrischen Strom zu führen, der dazu vorgesehen ist, in einem geeigneten Heizmittel Induktionseffekte, insbesondere Wirbelströme und/oder Umrhagnetisierungseffekte, hervorzurufen. Vorzugsweise ist die Induktionsheizleitung als Induktivität, insbesondere als Spule, vorteilhaft als Flachspule, vorzugsweise zumindest im Wesentlichen in Form einer Kreisscheibe, alternativ in Form eines Ovals oder eines Rechtecks, ausgebildet. Insbesondere weist die Induktionsheizleitung, insbesondere mit einem gekoppelten Heizmittel, eine Induktivität von zumindest 0,1 µH, insbesondere zumindest 0,3 µH, vorteilhaft zumindest 1 µH, auf. Insbesondere weist die Induktionsheizleitung, insbesondere ohne ein gekoppeltes Heizmittel, eine Induktivität von maximal 100 mH, insbesondere maximal 10 µH, vorteilhaft maximal 1 mH, auf. Vorzugsweise ist die Induktionsheizleitung dazu vorgesehen, zumindest in einem Betriebszustand von hochfrequentem Wechselstrom, insbesondere einem Wechselstrom mit einer Frequenz von zumindest 1 kHz, insbesondere zumindest 3 kHz, vorteilhaft zumindest 10 kHz, vorzugsweise zumindest 20 kHz, insbesondere maximal 100 kHz, insbesondere mit einer Stromstärke von zumindest 0,5 A, insbesondere zumindest 1 A, vorteilhaft zumindest 3 A, vorzugsweise zumindest 10 A, durchflossen zu werden. Insbesondere weist das Schaltelement eine Spannungsfestigkeit von zumindest 900 V, insbesondere zumindest 1000 V, vorteilhaft zumindest 1200 V, auf. Insbesondere weist der Induktivzweig durch Kopplung der Induktivitäten des Induktivzweigs mit zumindest einem Gargeschirr und/oder zumindest einem Heizkörper einen Wirkwiderstand auf, der zumindest 10%, insbesondere zumindest 20%, vorteilhaft zumindest 40%, besonders vorteilhaft zumindest 60%, eines Scheinwiderstands des Induktivzweigs entspricht. Unter einem "Schaltelement" soll insbesondere ein elektrisches Bauteil verstanden werden, das dazu vorgesehen ist, in Abhängigkeit von einem Ansteuersignal eine leitende Verbindung zwischen einem ersten und einem zweiten Leistungskontakt herzustellen oder zu trennen. Insbesondere ist das Schaltelement dazu vorgesehen, bei Frequenzen von über 100 kHz prellfrei zu schalten. Vorzugsweise ist das Schaltelement als Halbleiterbauteil, insbesondere als Transistor, vorteilhaft als IGBT oder als MOS-FET, ausgebildet. Insbesondere ist das Schaltelement dazu vorgesehen, in zumindest einem Betriebszustand einen Effektivstrom von zumindest 5 A, insbesondere zumindest 10 A, vorteilhaft zumindest 15 A, zu tragen. Unter einer "direkten Verbindung" soll insbesondere eine elektrische Verbindung verstanden werden, die, zumindest in einem Betriebszustand mit einem Stromfluss von Wechselstrom über die Verbindung mit einer Frequenz zwischen 1 kHz und 100 kHz, eine Impedanz aufweist, die von ihrem Betrag her kleiner ist als 10 V/A, insbesondere kleiner ist als 1 V/A, vorzugsweise kleiner ist als 0,1 V/A und deren Betrag insbesondere über einen Frequenzbereich von 1 kHz bis 100 kHz um maximal 100 %, insbesondere maximal 40 %, vorteilhaft maximal 10 % und vorzugsweise maximal 3 %, schwankt. Unter einer Impedanz soll insbesondere eine Division einer Effektivspannung durch einen Effektivstrom der elektrischen Verbindung verstanden werden.

Durch die erfindungsgemäße Ausgestaltung kann insbesondere eine hohe Effizienz erreicht werden. Insbesondere kann erreicht werden, dass ein mittlerer Strom, der über die Schaltelemente fließt, minimiert wird, da die Schaltelemente außerhalb des Resonanzheizkreises angeordnet sind und somit Resonanzströme nur einen geringen Einfluss auf einen mittleren Strom der Schaltelemente haben. Insbesondere kann ein momentaner Strom durch die Schaltelemente weitestgehend auf einen Strom, der von einer Energieversorgung geliefert wird, reduziert werden. Weiterhin kann eine hohe Leistung erreicht werden, da eine Anregung des Resonanzkreises von zwei Seiten her erfolgen kann. Insbesondere kann eine elektrische Effizienz von 99 % oder mehr erreicht werden.

Vorzugsweise weist die Kochfeldvorrichtung zumindest eine Steuereinheit auf, die dazu vorgesehen ist, die Schaltelemente abwechselnd, vorzugsweise periodisch abwechselnd, anzusteuern. Unter einer "Steuereinheit" soll insbesondere eine elektronische Einheit mit zumindest einer Recheneinheit und vorzugsweise zumindest einer Speichereinheit verstanden werden, in der zumindest ein Betriebsprogramm gespeichert ist, das dazu vorgesehen ist, von der Recheneinheit ausgeführt zu werden. Darunter, dass die Steuereinheit dazu vorgesehen ist, die Schaltelemente "abwechselnd" anzusteuern, soll insbesondere verstanden werden, dass die Steuereinheit dazu vorgesehen ist, zwei vorzugsweise periodische Ansteuersignale zu generieren, die jeweils einem der Schaltelemente zugeführt werden. Insbesondere ist die Steuereinheit dazu vorgesehen, zwischen zwei aufeinanderfolgenden, Aktivierungszeitpunkten eines der Schaltelemente das jeweils andere Schaltelement genau einmal zu aktivieren bzw. zwischen zwei aufeinander folgenden Deaktivierungszeitpunkten eines der Schaltelemente das jeweils andere Schaltelement genau einmal zu deaktivieren. Vorzugsweise ist die Steuereinheit dazu vorgesehen, eines der Schaltelemente zu aktivieren und zumindest im Wesentlichen gleichzeitig, insbesondere mit einem Abstand von weniger als 10 insbesondre weniger als 3%, vorteilhaft weniger als 1%, vorzugsweise weniger als 0,3 %, eines Abstands zwischen zwei aufeinander folgenden Aktivierungszeitpunkten, das jeweils andere Schaltelement zu deaktivieren. Es kann insbesondere eine hohe Effizienz erreicht werden.

Weiterhin wird vorgeschlagen, dass die Steuereinheit dazu vorgesehen ist, die Schaltelemente mit einer Schaltfrequenz anzusteuern, die maximal so groß ist wie eine Resonanzfrequenz des Resonarizheizkreises. Insbesondere ist die Steuereinheit dazu vorgesehen, eine angeforderte Leistung mittels Regelung der Schaltfrequenz einzustellen. Eine Resonanzfrequenz des Resonanzkreises beträgt insbesondere maximal 120 kHz, vorteilhaft maximal 110 kHz, vorzugsweise maximal 100 kHz. Es kann insbesondere eine hohe Effizienz erreicht werden, da insbesondere Schaltverluste beim Einschalten der Schaltelemente vermieden werden können, da eine, über dem jeweiligen Schaltelement abfallende Nullspannung bei einem Einschalten erreicht werden kann.

Ferner wird vorgeschlagen, dass die Kochfeldvorrichtung eine Energieanschlusseinheit aufweist. Unter einer "Energieanschlusseinheit" soll insbesondere eine elektrische Einheit verstanden werden, die dazu vorgesehen ist, Energie einer Energiequelle für einen Einsatz in dem Resonanzheizkreis aufzubereiten. Insbesondere weist die Energieanschlusseinheit zwei Eingangskontakte auf, die dazu vorgesehen sind, in einem Betriebszustand mit einer Energiequelle, insbesondere einer Phase eines Hausanschlusses, verbunden zu sein. Insbesondere weist die Energieanschlusseinheit zumindest eine Filtereinheit auf, die dazu vorgesehen ist, eine Rückspeisung von hochfrequenten Störspannungen in die Energiequelle zu vermeiden. Insbesondere weist die Energieanschlusseinheit zumindest eine Gleichrichtereinheit auf, die zwischen die Eingangskontakte geschaltet ist. Insbesondere weist die Energieanschlusseinheit zumindest eine Pufferkapazität auf, die dazu vorgesehen ist, eine gleichgerichtete Spannung der Gleichrichtereinheit zu puffern. Vorteilhaft weist die Energieanschlusseinheit zumindest eine Drosselspule auf, die insbesondere zumindest dazu vorgesehen ist, Kurzschlussströme zu vermeiden. Insbesondere weist die Drosselspule eine Induktivität auf, die zumindest einem zweifachen, insbesondere zumindest einem vierfachen, vorteilhaft zumindest einem achtfachen, insbesondere maximal einem hundertfachen, vorteilhaft maximal einem fünfzigfachen, vorzugsweise maximal einem dreißigfachen einer typischen Induktivität des Induktivzweiges in einem Betriebszustand entspricht. Insbesondere ist die Energieanschlusseinheit dazu vorgesehen, als Stromquelle zu fungieren. Insbesondere weist die Energieanschlusseinheit zwei Pole auf, an der eine Energie abgegriffen und in den Resonanzheizkreis eingeleitet werden kann. Vorteilhaft ist ein zweiter Pol der Energieanschlusseinheit zumindest an den zweiten Leistungskontakt des ersten Schaltelements und vorzugsweise an den zweiten Leistungskontakt des zweiten Schaltelements angeschlossen. Es kann insbesondere eine vorteilhafte Ausgestaltung erreicht werden.

Weiterhin wird vorgeschlagen, dass ein erster Pol der Energieanschlusseinheit an einem Mittelabgriff des Induktivzweigs zwischen zwei Teilinduktivitäten des Induktivzweigs angeschlossen ist. Alternativ wird vorgeschlagen, dass der erste Pol der Energieanschlusseinheit an einem der Verbindungspunkte angeschlossen ist. Es kann insbesondere eine hohe Leistung erreicht werden. Insbesondere kann eine wechselseitige Anregung des Resonanzheizkreises erreicht werden.

Ferner wird vorgeschlagen, dass die Teilinduktivitäten magnetisch gekoppelt sind. Darunter, dass eine erste Teilinduktivität mit einer zweiten Teilinduktivität "magnetisch gekoppelt" sind, soll insbesondere verstanden werden, dass zumindest ein Großteil, insbesondere zumindest 50%, vorteilhaft zumindest 80%, besonders vorteilhaft zumindest 90%, vorzugsweise zumindest 95%, der Feldlinien die in einem Betriebsmodus von der ersten Teilinduktivität erzeugt werden, auch Leiter der zweiten Teilinduktivität umschließen. Vorzugsweise sind die Teilinduktivitäten gegenseitig miteinander magnetisch gekoppelt. Insbesondere bilden die beiden Teilinduktivitäten eine gemeinsame Kochzone. Insbesondere weisen die Teilinduktivitäten zumindest im Wesentlichen gleiche Induktivitäten auf. Insbesondere weisen die Teilinduktivitäten eine zumindest im Wesentlichen gleiche Form und/oder Größe auf. Es kann insbesondere eine effiziente Ausgestaltung erreicht werden.

Weiterhin wird vorgeschlagen, dass die Teilinduktivitäten ausgehend von dem Mittelabgriff einen unterschiedlichen, insbesondere entgegengerichteten, Wicklungssinn aufweisen. Es kann insbesondere eine effiziente Ausgestaltung erreicht werden. Insbesondere kann eine additive Kopplung der Induktionseffekte erreicht werden. Es kann insbesondere erreicht werden, dass die Teilinduktivitäten ausgehend von einem der Verbindungspunkte einen gleichen Wicklungssinn aufweisen.

Vorzugsweise sind die zweiten Leistungskontakte der beiden Schaltelemente direkt miteinander verbunden. Es kann insbesondere ein geringer Spannungsabfall und somit eine,hohe Effizienz erreicht werden. Insbesondere kann eine gleichartige, insbesondere antisymmetrische Ansteuerung der Schaltelemente ermöglicht werden.

Vorteilhaft weisen die Schaltelemente jeweils eine antiparallel geschaltete Freilaufdiode auf. Unter einer "antiparallel geschalteten Freilaufdiode" soll insbesondere eine Diode verstanden werden, die derart parallel zu dem Schaltelement angeordnet ist, dass in einem Zustand, in dem zwischen den Polen der Energieanschlusseinheit eine Spannung anliegt, und die Schaltelemente geschlossen sind, ein Stromfluss über die Diode vermieden wird. Insbesondere ist die Freilaufdiode intrinsisch in das Schaltelement integriert. Es kann insbesondere eine effiziente Steuerung erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen in schematischer Darstellung

- Fig. 1: ein erfindungsgemäßes Kochfeld in einer Ansicht von oben,
- Fig. 2: einen Schaltplan einer erfindungsgemäßen Kochfeldvorrichtung,
- Fig. 3: ein Verlaufsdiagramm für unterschiedliche elektrische Kenngrößen der Kochfeldvorrichtung in einem Betriebsmodus,
- Fig. 4: eine erste Ausgestaltung eines Induktivzweigs nach Figur 2,
- Fig. 5: eine zweite Ausgestaltung eines Induktivzweigs nach Figur 2,
- Fig. 6: eine dritte Ausgestaltung eines Induktivzweigs nach Figur 2 und
- Fig. 7: einen Schaltplan einer alternativen erfindungsgemäßen Kochfeldvorrichtung.

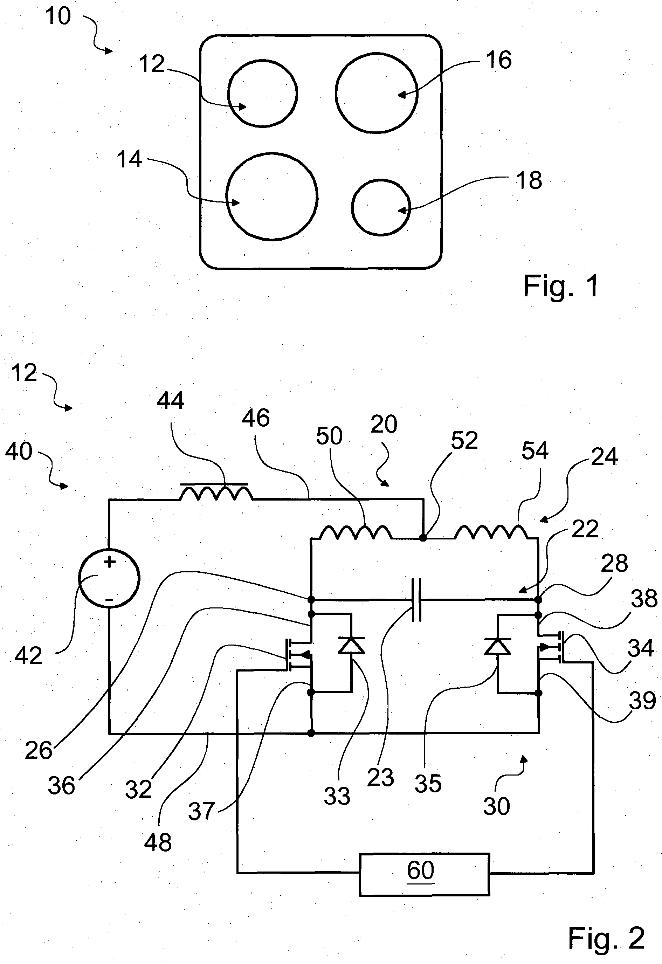

Figur 1 zeigt ein als Induktionskochfeld ausgebildetes Kochfeld 10 mit vier Kochzonen, die jeweils von einer der Kochfeldvorrichtungen 12, 14, 16, 18 betrieben werden.

Figur 2 zeigt eine der Kochfeldvorrichtungen 12. Die Kochfeldvorrichtung 12 weist einen Resonanzheizkreis 20 auf, der aus einer Parallelschaltung eines Kapazitivzweiges 22 und eines Induktivzweiges 24 zwischen einem ersten und einem zweiten Verbindungspunkt 26, 28 gebildet ist. Weiterhin weist die Kochfeldvorrichtung 12 eine Heizfrequenzeinheit 30 auf, die zwei Schaltelemente 32, 34 aufweist, und die dazu vorgesehen ist, den Resonanzheizkreis 20 anzuregen. Ein erster Leistungskontakt 36 eines ersten der Schaltelemente 32 ist an dem ersten Verbindungspunkt 26 angeschlossen und ein erster Leistungskontakt 38 eines zweiten der Schaltelemente 34 ist an dem zweiten Verbindungspunkt 28 angeschlossen. Zweite Leistungskontakte 37, 39 der Schaltelemente 32, 34 sind direkt miteinander verbunden. Die Schaltelemente 32, 34 weisen jeweils eine antiparallel geschaltete Freilaufdiode 33, 35 auf. Die Schaltelemente 32, 34 sind als MOS-FETs ausgebildet. Der Kapazitivzweig 22 weist einen einzelnen Kondensator 23 auf.

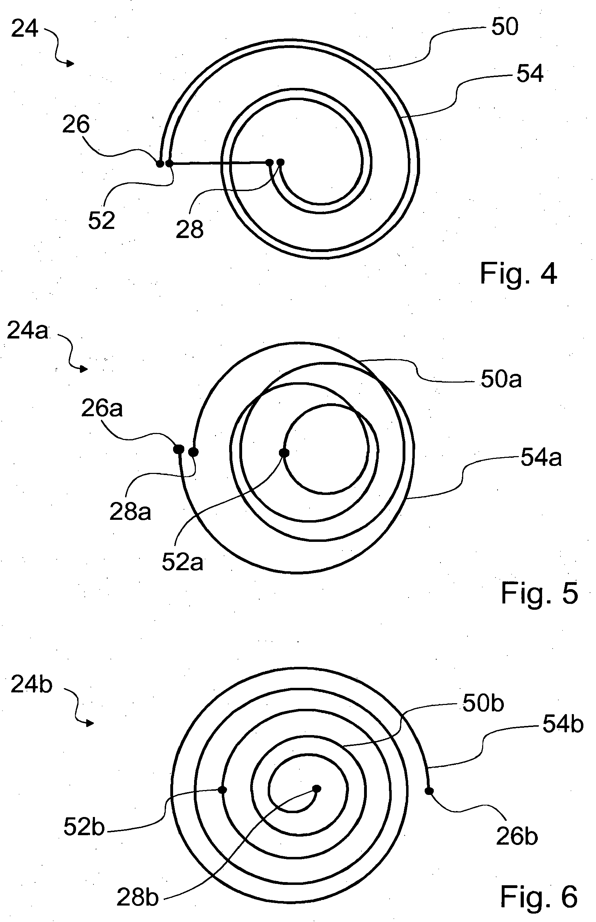

Die Kochfeldvorrichtung 12 weist eine Energieanschlusseinheit 40 auf. Die Energieanschlusseinheit 40 ist hier als Gleichspannungsquelle 42 mit in Reihe geschalteter Drosselspule 44 dargestellt. Ein zweiter Pol 48 der Energieanschlusseinheit 40 ist mit den zweiten Leistungskontakten 37, 39 der Schaltelemente 32, 34 direkt verbunden. Der Induktivzweig 24 ist von zwei Teilinduktivitäten 50, 54 gebildet. Ein erster Pol 46 der Energieanschlusseinheit 40 ist an einem Mittelabgriff 52 des Induktivzweigs 24 zwischen den zwei Teilinduktivitäten 50, 54 des Induktivzweigs 24 angeschlossen. Die Teilinduktivitäten 50, 54 sind jeweils als Induktionsheizleiter ausgebildet (Figur 4). Die Teilinduktivitäten 50, 54 sind magnetisch gekoppelt. Die Teilinduktivitäten 50, 54 weisen, ausgehend von dem Mittelabgriff 52 einen unterschiedlichen Wicklungssinn auf. Die Teilinduktivitäten 50, 54 sind von jeweils einer Hälfte der Litzen einer einzelnen Litzenleitung gebildet. Dadurch wird eine gleiche Induktivität für beide der Teilinduktivitäten 50, 54 erreicht. Weiterhin sind die lnduktionsheizleitungen der Teilinduktivitäten 50, 54 parallel zueinander geführt. Eine erste der Teilinduktivitäten 50 ist zwischen dem ersten Verbindungspunkt 26 und dem Mittelabgriff 52 angeordnet. Eine zweite der Teilinduktivitäten 54 ist zwischen dem zweiten Verbindungspunkt 28 und dem Mittelabgriff 52 angeordnet.

Weiterhin weist die Kochfeldvorrichtung 12 eine Steuereinheit 60 auf, die dazu vorgesehen ist, die Schaltelemente 32, 34 abwechselnd anzusteuern. Die Steuereinheit 60 ist dazu vorgesehen, die Schaltelemente 32, 34 mit Steuersignalen A_{S1}, A_{S2} anzusteuern, die jeweils eine Schaltfrequenz aufweisen, die maximal so groß ist, wie eine Resonanzfrequenz des Resonanzheizkreises 20.

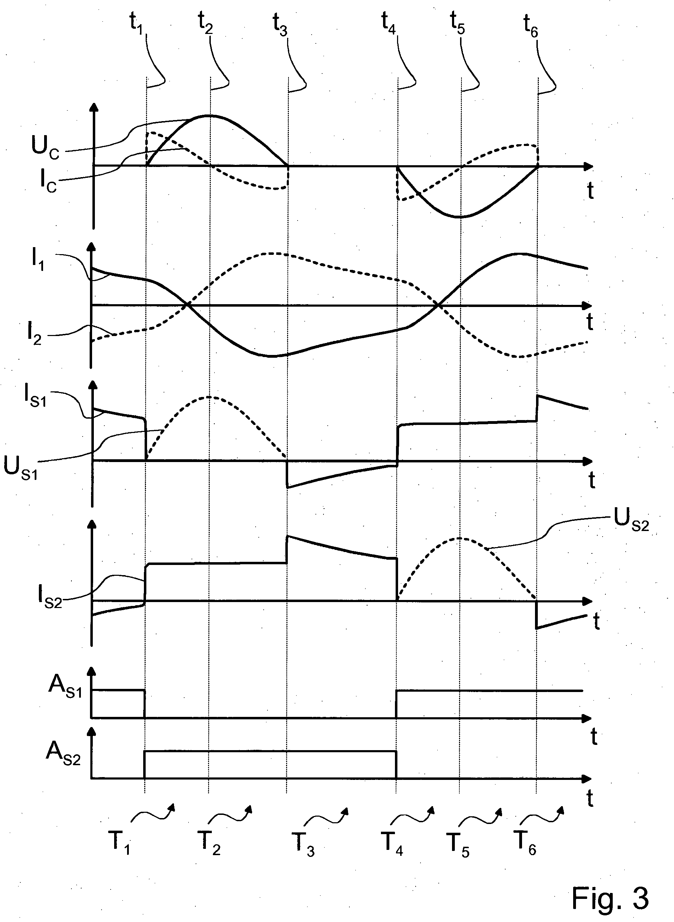

Figur 3 zeigt in einem ersten Diagramm zeitliche Verläufe einer Spannung U_{c}, die über dem Kapazitivzweig 22 abfällt und eines Stroms I_{C}, der im Kapazitivzweig 22 fließt. Ein zweites Diagramm zeigt zeitliche Verläufe eines Stroms I₁, der durch die erste Teilinduktivität 50 fließt, und eines Stroms I₂, der durch die zweite Teilinduktivität 54 fließt. Ein drittes Diagramm zeigt einen zeitlichen Verlauf einer Spannung U_{S1}, die über dem ersten Schaltelement 32 abfällt und einen Strom I_{S1}, der über das erste Schaltelement 32 bzw. die dem Schaltelement 32 antiparallel geschaltete Freilaufdiode 33 fließt. Ein viertes Diagramm zeigt einen zeitlichen Verlauf einer Spannung U_{S2}, die über dem zweiten Schaltelement 34 abfällt und einen Strom I_{S2}, der über das zweite Schaltelement 34 bzw. die dem Schaltelement 34 antiparallel geschaltete Freilaufdiode 35 fließt. In einem fünften Diagramm ist das Steuersignal A_{S1} dargestellt, das dazu vorgesehen ist, einen Schaltzustand des ersten Schaltelements 32 festzulegen. In einem letzten und sechsten Diagramm ist das Steuersignal A_{S2} dargestellt, das dazu vorgesehen ist, einen Schaltzustand des zweiten Schaltelements 34 festzulegen.

Zu einem ersten Zeitpunkt t₁ deaktiviert die Steuereinheit 60 über das Steuersignal A_{S1} das erste Schaltelement 32 und aktiviert über das Steuersignal A_{S2} das zweite Schaltelement 34. Ein in dem Resonanzheizkreis 20 fließender Restresonanzstrom von der Energieanschlusseinheit 40 über die erste Teilinduktivität 50 einfließender Strom laden den Kapazitivzweig 22 in einem ersten Zeitintervall Das auf den ersten Zeitpunkt t₁ folgt, bis zu einem zweiten Zeitpunkt t₂ auf. Zu dem zweiten Zeitpunkt t₂ kehrt sich ein Stromfluss in dem Kapazitivzweig 22 um. Der Kapazitivzweig 22 entlädt sich in einem auf den zweiten Zeitpunkt t₂ folgenden Zeitintervall T₂ entsprechend der Resonanzfrequenz über den Induktivzweig 24, bis zu einem dritten Zeitpunkt t₃ der Kapazitivzweig 22 entladen ist. In dem Zeitintervall T₂ fließt ein Strom der Energieanschlusseinheit 40 über die zweite Teilinduktivität 54 und das zweite Schaltelement 34. Ab dem dritten Zeitpunkt t₃ fordert der Induktivzweig 24 eine Aufrechterhaltung des Resonanzstroms, so dass in einem dritten Zeitintervall T₃ ein Strom des Induktivzweigs 24 über das zweite Schaltelement 34 und die Freilaufdiode 33 des ersten Schaltelements 32 fließt. Durch die Freilaufdiode 33 wird vermieden, dass sich eine Spannung U_{C} über dem Kapazitivzweig 22 aufbaut, die bei einer Aktivierung des ersten Schaltelements 32 zu einem Zeitpunkt t₄ stören würde.

Zu dem vierten Zeitpunkt t₄ aktiviert die Steuereinheit 60 über das Steuersignal A_{S1} das erste Schaltelement 32 und deaktiviert über das Steuersignal A_{S2} das zweite Schaltelement 34. Ein in dem Resbnanzheizkreis 20 fließender Restresonanzstrom und von der Energieanschlusseinheit 40 über die zweite Teilinduktivität 54 einfließender Strom laden den Kapazitivzweig 22 in einem vierten Zeitintervall T₄, das auf den vierten Zeitpunkt t₄ folgt, bis zu einem fünften Zeitpunkt t₅ auf. Zu dem fünften Zeitpunkt t₅ kehrt sich ein Stromfluss in dem Kapazitivzweig 22 um. Der Kapazitivzweig 22 entlädt sich in einem auf den fünften Zeitpunkt t₅ folgenden fünften Zeitintervall T₅ entsprechend der Resonanzfrequenz über den Induktivzweig 24, bis zu einem sechsten Zeitpunkt t₆ der Kapazitivzweig 22 entladen ist. In dem Zeitintervall T₆ fließt ein Strom der Energieanschlusseinheit 40 über die erste Teilinduktivität 50 und das erste Schaltelement 32. Ab dem sechsten Zeitpunkt t₆ fordert der Induktivzweig 24 eine Aufrechterhaltung des Resonanzstroms, so dass ein Strom des Induktivzweigs 24 über das erste Schaltelement 32 und die Freilaufdiode 35 des zweiten Schaltelements 34 fließt. Durch die Freilaufdiode 35 wird vermieden, dass sich eine Spannung U_{c} über dem Kapazitivzweig 22 aufbaut, die bei einer Aktivierung des zweiten Schaltelements 34 zu einem Zeitpunkt t₁ stören würde.

Eine Summe der Zeitintervalle T₁ bis T₆ entspricht einer Periodendauer der Steuersignale A_{S1}, A_{S2}.

Weiterhin ist ein Betriebsmodus denkbar, in dem die Steuereinheit 60 lediglich eines der Schaltelemente 32, 34, vorzugsweise periodisch, ansteuert.

In den Figuren 5 bis 7 sind drei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 4, verwiesen werden kann. Zur Unterscheidung der Ausführungsbeispiele sind die Buchstaben a bis c an die Bezugszeichen der Ausführungsbeispiele der Figuren 5 bis 7 hinzugefügt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 4, verwiesen werden.

Figur 5 zeigt eine alternative Ausgestaltung eines Induktivzweigs 24a mit einer ersten und einer zweiten Teilinduktivität 50a, 54a, wobei zwischen den beiden Teilinduktivitäten 50a, 54a ein Mittelabgriff 52a liegt. Die Teilinduktivitäten 50a, 54a sind miteinander stark magnetisch gekoppelt. Die Teilinduktivitäten 50a, 54a entspringen einem gemeinsamen Punkt, dem Mittelabgriff 52a, und verlaufen ausgehend von dem gemeinsamen Punkt, mit unterschiedlichem Wicklungssinn in einer spiralförmigen Bahn. Die Induktionsheizleitungen der Teilinduktivitäten 50a, 54a belegen dabei eine im Wesentlichen gleiche Grundfläche.

Figur 6 zeigt eine alternative Ausgestaltung eines Induktivzweigs 24b mit einer ersten und einer zweiten Teilinduktivität 50b, 54b, wobei zwischen den Teilinduktivitäten 50b, 54b ein Mittelabgriff 52b liegt. Die Teilinduktivitäten 50b, 54b sind Teil einer einzelnen Spirale. Eine erste der Teilinduktivitäten 50b bildet einen inneren Teil der Spirale. Eine zweite der Teilinduktivitäten 54b bildet einen äußeren Teil der Spirale. Die Teilinduktivitäten 50b, 54b weisen eine schwache magnetische Kopplung miteinander auf.

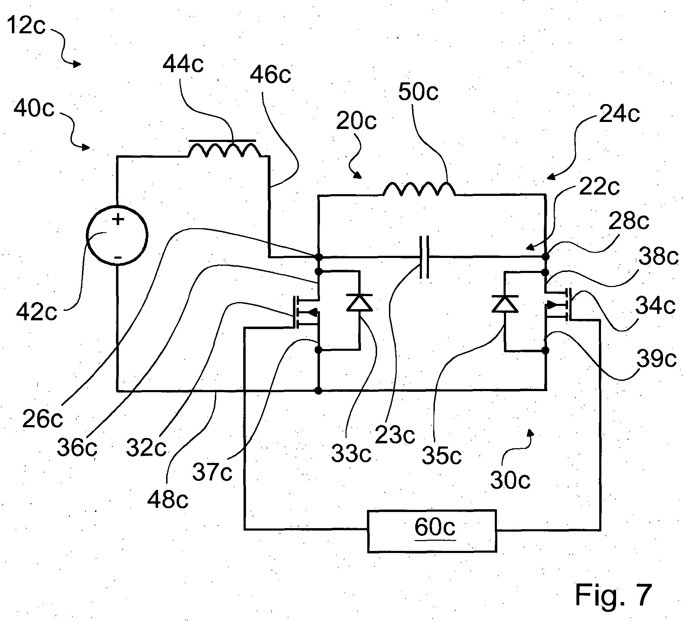

Figur 7 zeigt eine alternative Kochfeldvorrichtung 12c mit einem Resohanzheizkreis 20c, einer Energieanschlusseinheit 40c und einer Heizfrequenzeinheit 30c, die zwei Schaltelemente 32c, 34c aufweist, die jeweils an Verbindungspunkten 26c, 28c des Resonanzheizkreises 20c angeschlossen sind. Ein erster Pol 46c der Energieanschlusseinheit 40c ist ebenfalls an einen Verbindungspunkt 26c angeschlossen.

**Bezugszeichen**

| | | | |
|---|---|---|---|
| 10 | Hausgerät | 52 | Mittelabgriff |
| 12 | Kochfeldvorrichtung | 54 | Teilinduktivität |
| 14 | Kochfeldvorrichtung | 60 | Steuereinheit |
| 16 | Kochfeldvorrichtung | A_{S1} | Steuersignal |
| 18 | Kochfeldvorrichtung | A_{S2} | Steuersignal |
| 20 | Resonanzheizkreis | I₁ | Strom |
| 22 | Kapazitivzweig | I₂ | Strom |
| 23 | Kondensator | I_{C} | Strom |
| 24 | Induktivzweig | I_{S1} | Strom |
| 26 | Verbindungspunkt | I_{S2} | Strom |
| 28 | Verbindungspunkt | T₁ | Zeitintervall |
| 30 | Heizfrequenzeinheit | T₂ | Zeitintervall |
| 32 | Schaltelement | T₃ | Zeitintervall |
| 33 | Freilaufdiode | T₄ | Zeitintervall |
| 34 | Schaltelement | T₅ | Zeitintervall |
| 35 | Freilaufdiode | T₆ | Zeitintervall |
| 36 | Leistungskontakt | U_{C} | Spannung |
| 37 | Leistungskontakt | U_{S1} | Spannung |
| 38 | Leistungskontakt | U_{S2} | Spannung |
| 39 | Leistungskontakt | t₁ | Zeitpunkt |
| 40 | Energieanschlusseinheit | t₂ | Zeitpunkt |
| 42 | Gleichspannungsquelle | t₃ | Zeitpunkt |
| 44 | Drosselspule | t₄ | Zeitpunkt |
| 44c | Drosselspule | t₅ | Zeitpunkt |
| 46 | Pol | t₆ | Zeitpunkt |
| 48 | Pol | | |
| 50 | Teilinduktivität | | |

## Patentansprüche

1. Kochfeldvorrichtung, mit zumindest einem Resonanzheizkreis (20; 20c), der eine Parallelschaltung aufweist, die zumindest einen Kapazitivzweig (22, 22c) und zumindest einen Induktivzweig (24; 24a; 24b; 24c) zwischen einem ersten und einem zweiten Verbindungspunkt (26, 28; 26c, 28c) der Parallelschaltung aufweist, und mit zumindest einer Heizfrequenzeinheit (30; 30c), die zumindest zwei Schaltelemente (32, 34; 32c, 34c) aufweist, die dazu vorgesehen sind, in Abhängigkeit von einem Ansteuersignal eine leitende Verbindung zwischen einem ersten und einem zweiten Leistungskontakt herzustellen oder zu trennen, und die dazu vorgesehen ist, den Resonanzheizkreis (20; 20c) anzuregen, **dadurch gekennzeichnet, dass** ein erster Leistungskontakt (36; 36c) eines ersten der Schaltelemente (32; 32c) direkt mit dem ersten Verbindungspunkt (26; 26c) verbunden ist und ein erster Leistungskontakt (38; 38c) eines zweiten der Schaltelemente (34; 34c) direkt mit dem zweiten Verbindungspunkt (28; 28c) verbunden ist.

2. Kochfeldvorrichtung nach Anspruch 1, **gekennzeichnet durch** zumindest eine Steuereinheit (60; 60c), die dazu vorgesehen ist, die Schaltelemente (32, 34; 32c, 34c) abwechselnd anzusteuern.

3. Kochfeldvorrichtung nach Anspruch 2, **dadurch gekennzeichnet, dass** die Steuereinheit (60; 60c) dazu vorgesehen ist, die Schaltelemente (32, 34; 32c, 34c) mit einer Schaltfrequenz anzusteuern, die maximal so groß ist, wie eine Resonanzfrequenz des Resonänzheizkreises (20; 20c).

4. Kochfeldvorrichtung nach einem der vorhergehenden Ansprüche, **gekennzeichnet durch** eine Energieanschlusseinheit (40; 40c):

5. Kochfeldvorrichtung nach Anspruch 4, **dadurch gekennzeichnet, dass** ein erster Pol (46) der Energieanschlusseinheit (40) an einem Mittelabgriff (52; 52a; 52b) des Induktivzweigs (24; 24a; 24b) zwischen zwei Teilinduktivitäten (50, 54; 50a, 54a; 50b, 54b) des Induktivzweigs (24; 24a; 24b) angeschlossen ist.

6. Kochfeldvorrichtung nach Anspruch 5, **dadurch gekennzeichnet, dass** die Teilinduktivitäten (50, 54; 50a, 54a; 50b, 54b) magnetisch gekoppelt sind.

7. Kochfeldvorrichtung zumindest nach Anspruch 5, **dadurch gekennzeichnet, dass** die Teilinduktivitäten (50, 54; 50a, 54a; 50b, 54b) ausgehend von dem Mittelabgriff (52; 52a; 52b) einen unterschiedlichen Wicklungssinn aufweisen.

8. Kochfeldvorrichtung nach einem der vorhergehenden Ansprüche, **dadurch gekennzeichnet, dass** die zweiten Leistungskontakte (37, 39; 37c, 39c) der beiden Schaltelemente (32, 34; 32c, 34c) direkt miteinander verbunden sind.

9. Kochfeldvorrichtung nach einem der vorhergehenden Ansprüche, **dadurch gekennzeichnet, dass** die Schaltelemente (32, 34; 32c, 34c) jeweils eine antiparallel geschaltete Freilaufdiode (33, 35; 33c, 35c) aufweise

10. Kochfeldvorrichtung Kochfeld, mit zumindest einer Kochfeldvorrichtung (12, 14, 16, 18; 12c) nach einem der vorhergehenden Ansprüche.

11. Verfahren zum Betrieb einer Kochfeldvorrichtung (12, 14, 16, 18; 12c) nach einem der Ansprüche 1 bis 9, mit zumindest einem Resonanzheizkreis (20; 20c), der eine Parallelschaltung aufweist, die zumindest einen Kapazitivzweig (22, 22c) und zumindest einen Induktivzweig (24; 24a; 24b; 24c) zwischen einem ersten und einem zweiten Verbindungspunkt (26, 28; 26c, 28c) der Parallelschaltung aufweist, und mit zumindest einer Heizfrequenzeinheit (30; 30c), die zumindest zwei Schaltelemente (32, 34; 32c, 34c) aufweist, wobei in Abhängigkeit von einem Ansteuersignal eine leitende Verbindung zwischen einem ersten und einem zweiten Leistungskontakt durch die Schaltelemente (32, 34; 32c, 34c) hergestellt oder getrennt wird, und wobei der Resonanzheizkreis (20; 20c) durch die Heizfrequenzeinheit (30; 30c) angeregt wird, und wobei ein erster Leistungskontakt (36; 36c) eines ersten der Schaltelemente (32; 32c) direkt mit dem ersten Verbindungspunkt (26; 26c) verbunden ist und ein erster Leistungskontakt (38; 38c) eines zweiten der Schaltelemente (34; 34c) direkt mit dem zweiten Verbindungspunkt (28; 28c) verbunden ist.

## Claims

1. Cooking hob device, having at least one resonance heating circuit (20; 20c) which has a parallel circuit which has at least one capacitive branch (22; 22c) and at least one inductive branch (24; 24a; 24b; 24c) between a first and a second connection point (26, 28; 26c, 28c) of the parallel circuit, and having at least one heating frequency unit (30; 30c) which has at least two switching elements (32, 34; 32c, 34c) which are provided to establish or interrupt, as a function of an actuation signal, a conductive connection between a first and a second power contact, and which is provided to energise the resonance heating circuit (20; 20c), **characterised in that** a first power contact (36; 36c) of a first of the switching elements (32; 32c) is directly connected to the first connection point (26; 26c) and a first power contact (38; 38c) of a second of the switching elements (34; 34c) is directly connected to the second connection point (28; 28c).

2. Cooking hob device according to claim 1, **characterised by** at least one control unit (60; 60c), which is provided to energise the switching elements (32, 34; 32c, 34c) alternately.

3. Cooking hob device according to claim 2, **characterised in that** the control unit (60; 60c) is provided to actuate the switching elements (32, 34; 32c, 34c) with a switching frequency which is maximally as large as a resonance frequency of the resonance heating circuit (20; 20c).

4. Cooking hob device according to one of the preceding claims, **characterised by** a power termination unit (40; 40c).

5. Cooking hob device according to claim 4, **characterised in that a** first pole (46) of the power termination unit (40) is connected to a centre tap (52; 52a; 52b) of the inductive branch (24; 24a; 24b) between two partial inductances (50, 54; 50a, 54a ; 50b, 54b) of the inductive branch (24; 24a; 24b).

6. Cooking hob device according to claim 5, **characterised in that** the partial inductances (50, 54; 50a, 54a; 50b, 54b) are magnetically coupled.

7. Cooking hob device at least according to claim 5, **characterised in that** the partial inductances (50, 54; 50a, 54a; 50b, 54b) have a different winding sense starting from the centre tap (52; 52a; 52b).

8. Cooking hob device according to one of the preceding claims, **characterised in that** the second power contacts (37, 39; 37c, 39c) of the two switching elements (32, 34; 32c, 34c) are directly connected to one another.

9. Cooking hob device according to one of the preceding claims, **characterised in that** the switching elements (32, 34; 32c, 34c) each have an anti-parallel freewheeling diode (33, 35; 33c, 35c).

10. Cooking hob, having at least one cooking hob device (12, 14, 16, 18; 12c) according to one of the preceding claims.

11. Method for operating a cooking hob device (12, 14, 16, 18; 12c) according to one of claims 1 to 9, having at least one resonance heating circuit (20; 20c) which has a parallel circuit which has at least one capacitive branch (22; 22c) and at least one inductive branch (24; 24a; 24b; 24c) between a first and a second connection point (26, 28; 26c, 28c) of the parallel circuit, and having at least one heating frequency unit (30; 30c) which has at least two switching elements (32, 34; 32c, 34c), wherein as a function of an actuation signal a conductive connection between a first and a second power contact is established or interrupted by the switching elements (32, 34; 32c, 34c), and wherein the resonance heating circuit (20; 20c) is energised by the heating frequency unit (30; 30c), and wherein a first power contact (36; 36c) of a first of the switching elements (32; 32c) is directly connected to the first connection point (26; 26c) and a first power contact (38; 38c) of a second of the switching elements (34; 34c) is directly connected to the second connection point (28; 28c).

## Revendications

1. Dispositif de plaque de cuisson comprenant au moins un circuit de chauffage de résonance (20 ; 20c) qui présente un montage en parallèle, lequel présente au moins un branchement capacitif (22, 22c) et au moins un branchement inductif (24 ; 24a ; 24b ; 24c) entre un premier et un deuxième points de liaison (26, 28 ; 26c, 28c) du montage en parallèle, et comprenant au moins une unité de fréquence de chauffage (30, 30c) qui présente au moins deux éléments de commutation (32, 34 ; 32c, 34c) ménagés pour établir ou couper une liaison conductrice entre un premier et un deuxième contact de puissance en fonction d'un signal de commande, et qui est ménagée pour activer le circuit de chauffage de résonance (20 ; 20c), **caractérisé en ce qu'**un premier contact de puissance (36 ; 36c) d'un premier des éléments de commutation (32 ; 32c) est directement relié au premier point de liaison (26 ; 26c) et **en ce qu'**un premier contact de puissance (38 ; 38c) d'un deuxième des éléments de commutation (34 ; 34c) est directement relié au deuxième point de liaison (28 ; 28c).

2. Dispositif de plaque de cuisson selon la revendication 1, **caractérisé par** au moins une unité de commande (60 ; 60c) qui est ménagée pour activer les éléments de commutation (32, 34 ; 32c, 34c) en alternance.

3. Dispositif de plaque de cuisson selon la revendication 2, **caractérisé en ce que** l'unité de commande (60 ; 60c) est ménagée pour activer les éléments de commutation (32, 34 ; 32c, 34c) avec une fréquence de commutation qui est au maximum aussi grande qu'une fréquence de résonance du circuit de chauffage de résonance (20 ; 20c).

4. Dispositif de plaque de cuisson selon l'une quelconque des revendications précédentes, **caractérisé par** une unité de raccordement d'énergie (40 ; 40c).

5. Dispositif de plaque de cuisson selon la revendication 4, **caractérisé en ce qu'**un premier pôle (46) de l'unité de raccordement d'énergie (40) est raccordé à une prise centrale (52 ; 52a, 52b) du branchement inductif (24 ; 24a, 24b) entre deux inductances partielles (50, 54 ; 50a, 54a ; 50b, 54b) du branchement inductif (24 ; 24a, 24b).

6. Dispositif de plaque de cuisson selon la revendication 5, **caractérisé en ce que** les inductances partielles (50, 54 ; 50a, 54a ; 50b, 54b) sont couplées magnétiquement.

7. Dispositif de plaque de cuisson selon la revendication 5, **caractérisé en ce que** les inductances partielles (50, 54 ; 50a, 54a ; 50b, 54b), en partant de la prise centrale (52 ; 52a, 52b), présentent un sens de bobinage différent.

8. Dispositif de plaque de cuisson selon l'une quelconque des revendications précédentes, **caractérisé en ce que** les deuxièmes contacts de puissance (37, 39 ; 37c, 39c) des deux éléments de commutation (32, 34 ; 32c, 34c) sont directement reliés entre eux.

9. Dispositif de plaque de cuisson selon l'une quelconque des revendications précédentes, **caractérisé en ce que** les éléments de commutation (32, 34 ; 32c, 34c) présentent respectivement une diode à roue libre (33, 35 ; 33c, 35c) commutée de manière antiparallèle.

10. Plaque de cuisson comprenant au moins un dispositif de plaque de cuisson (12, 14, 16, 18 ; 12c) selon l'une quelconque des revendications précédentes.

11. Procédé de fonctionnement d'un dispositif de plaque de cuisson (12, 14, 16, 18 ; 12c) selon l'une quelconque des revendications 1 à 9, comprenant au moins un circuit de chauffage de résonance (20 ; 20c) qui présente un montage en parallèle, lequel présente au moins un branchement capacitif (22, 22c) et au moins un branchement inductif (24 ; 24a ; 24b ; 24c) entre un premier et un deuxième point de liaison (26, 28 ; 26c, 28c) du montage en parallèle, et comprenant au moins une unité de fréquence de chauffage (30, 30c) qui présente au moins deux éléments de commutation (32, 34 ; 32c, 34c), une liaison conductrice entre un premier et un deuxième contact de puissance étant établie ou coupée au moyen des éléments de commutation (32, 34 ; 32c, 34c) en fonction d'un signal de commande, et le circuit de chauffage de résonance (20 ; 20c) étant activé par l'unité de fréquence de chauffage (30 ; 30c), et un premier contact de puissance (36 ; 36c) d'un premier des éléments de commutation (32 ; 32c) étant directement relié au premier point de liaison (26 ; 26c) et un premier contact de puissance (38 ; 38c) d'un deuxième des éléments de commutation (34 ; 34c) étant directement relié au deuxième point de liaison (28 ; 28c).
